# EUROPEAN PATENT SPECIFICATION

(11) **EP 3 512 142 B1**
(45) Date of publication and mention of the grant of the patent: **06.10.2021**
(21) Application number: 17898307.8
(22) Date of filing: 24.02.2017
(51) Int. Cl.: H04L 1/18, H04L 1/08

(54) **COMMUNICATION METHOD, TERMINAL DEVICE AND NETWORK DEVICE**
KOMMUNIKATIONSVERFAHREN, ENDGERÄTEVORRICHTUNG UND NETZWERKVORRICHTUNG
PROCÉDÉ DE COMMUNICATION, DISPOSITIF TERMINAL, ET DISPOSITIF DE RÉSEAU

(43) Date of publication of application: 17.07.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIN, Yanan, Dongguan Guangdong 523860 (CN); LIU, Jianhua, Dongguan Guangdong 523860 (CN)
(74) Representative: Manitz Finsterwald Patent- und Rechtsanwaltspartnerschaft mbB
(86) International application number: PCT/CN2017/074833
(87) International publication number: WO 2018/152791

(56) References cited:
- EP-A1- 2 798 764
- WO-A2-2009/157859
- CN-A- 101 795 170
- CN-A- 102 461 004
- CN-A- 103 069 738
- US-B2- 8 605 674
- US-B2- 9 166 760
- HUAWEI ET AL: "URLLC data process in user plane", 3GPP DRAFT; R2-1700173 URLLC DATA PROCESS IN USER PLANE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, WA; 20170116 - 20170120 17 January 2017 (2017-01-17), XP051210758, Retrieved from the Internet: URL:http://www.3gpp.org/ftp/Meetings_3GPP_ SYNC/RAN2/Docs/ [retrieved on 2017-01-17]

## Description

### TECHNICAL FIELD

The present application relates to the field of communication, and more particularly to a communication method and a terminal device.

### BACKGROUND

In a long term evolution (LTE) carrier aggregation (CA) scenario, a network side may configure separate hybrid automatic repeat request (HARQ) entity for different aggregated carriers in media access control (MAC). Each HARQ entity manages its own HARQ process. The network side may transmit the same transport block (TB) in the same process or different HARQ processes of different HARQ entities. A terminal device needs to separately feed back the TB transmitted in the HARQ process of each HARQ entity. The feedback overhead is large, and the terminal device cannot obtain a combined gain of the same TBs transmitted through different HARQ entities. Therefore, a method is needed to solve the above problem.

Prior art examples are known from US 8 605 674 B2, Huawei et al, "URLLC data process in user plane", 3GPP Draft; R2-1700173 URLLC DATA PROCESS IN USER PLANE 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG2, no. Spokane, WA; 20170116-20170120 17 January 2017, XP051210758, and WO 2009/157859 A2.

### SUMMARY

The embodiments of the present application provide a communication method, and a terminal device, which can reduce signaling overhead and improve transmission gain. The invention is defined by the independent claims.

In a first aspect, there is provided a communication method according to independent claim 1. In a second aspect, there is provided a terminal device according to independent claim 8.

### BRIEF DESCRIPTION OF THE DRAWINGS

Fig. 1 is a schematic diagram of a wireless communication system in accordance with an embodiment of the present application.
Fig. 2 is a schematic diagram of a communication method in a scenario of carrier aggregation.
Fig. 3 is a schematic flowchart of a communication method according to an embodiment of the present application.
Fig. 4 is a schematic diagram of an example of a communication method in a scenario of carrier aggregation according to an embodiment of the present application.
Fig. 5 is a schematic diagram of an example of a communication method in a scenario of carrier aggregation according to another embodiment of the present application.
Fig. 6 is a schematic flowchart of a communication method according to an example not falling within the scope of the claims.
Fig. 7 is a schematic flowchart of a communication method according to an example not falling within the scope of the claims.
Fig. 8 is a schematic block diagram of a terminal device according to an embodiment of the present application.
Fig. 9 is a schematic block diagram of a network device in accordance with an example not falling within the scope of the claims.
Fig. 10 is a schematic block diagram of a network device according to another example not falling within the scope of the claims.
Fig. 11 is a schematic block diagram of a terminal device according to another embodiment of the present application.
Fig. 12 is a schematic block diagram of a network device according to still another example not falling within the scope of the claims.

### DETAILED DESCRIPTION

The technical solutions in the embodiments of the present disclosure will be described in the following with reference to the accompanying drawings in the embodiments of the present disclosure. It is obvious that the described embodiments are a part of the embodiments of the present disclosure, and not all embodiments. The invention is defined by the appended claims.

The technical solutions of the embodiments of the present disclosure can be applied to various communication systems, for example, global system of mobile communication ("GSM") system, code division multiple access ("CDMA") system, wideband code division multiple access ("WCDMA") system, general packet radio service ("GPRS"), long term evolution ("LTE") system, LTE Frequency division duplex ("FDD") system, LTE time division duplex ("TDD"), universal mobile telecommunication system ("UMTS"), worldwide interoperability for microwave access ("WiMAX") communication system or a future 5G system.

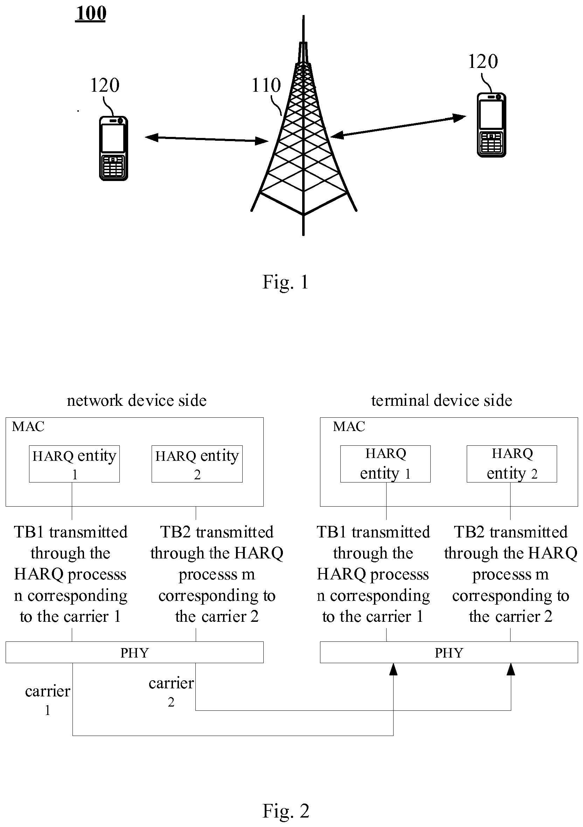

Fig. 1 shows a wireless communication system 100 to which an embodiment of the present application is applied. The wireless communication system 100 can include a network device 110. The network device 100 can be a device that communicates with a terminal device. The network device 100 may provide communication coverage for a particular geographic area and may communicate with terminal devices (e.g., UEs) located within the coverage area. Optionally, the network device 100 may be a Base Transceiver Station (BTS) in a GSM system or CDMA system, or a base station NodeB (NB) in a WCDMA system, or an Evolutional NodeB (eNB or eNodeB) in the LTE system, or a wireless controller in a Cloud Radio Access Network (CRAN), or a relay station, an access point, an in-vehicle device, a wearable device, and a network side device in a future 5G network or a network device in a future evolved Public Land Mobile Network (PLMN), or the like.

The wireless communication system 100 further includes at least one terminal device 120 located within the coverage of the network device 110. The terminal device 120 can be mobile or fixed. Optionally, the terminal device 120 may refer to an access terminal, a user equipment (UE), a subscriber unit, a subscriber station, a mobile station, a mobile platform, a remote station, a remote terminal, a mobile device, a user terminal, a terminal, a wireless communication device, a user agent or a user device. The access terminal may be a cellular phone, a cordless phone, a session initiation protocol (SIP) phone, a wireless local loop (WLL) station, a personal digital assistant (PDA), a handheld device with wireless communication capabilities, a computing device or other processing device connected to a wireless modem, an in-vehicle device, a wearable device, a terminal device in a future 5G network, or a terminal device in a future evolved PLMN or the like.

Optionally, device to device (D2D) communication can be performed between the terminal devices 120.

Optionally, the 5G system or network may also be referred to as a new radio (NR) system or network.

Fig. 1 exemplarily shows one network device and two terminal devices. Optionally, the wireless communication system 100 may include a plurality of network devices and other numbers of terminal devices may be included within the coverage of each network device. This embodiment of the present application does not limit this.

Optionally, the wireless communication system 100 may further include other network entities, such as a network controller, a mobility management entity, and the like. This embodiment of the present application does not limit this.

It should be understood that the terms "system" and "network" are used interchangeably herein. The term "and/or" in this context is merely an association describing the associated object, indicating that there may be three relationships. For example, A and/or B may indicate that only A exists, both A and B exist, and only B exists. In addition, the character "/" in this specification generally indicates an "or" relationship between contextual objects.

In the embodiment of the present application, the wireless communication system 100 can support CA, and the network device can configure an independent HARQ entity for each carrier in the MAC layer respectively. That is, each carrier corresponds to a corresponding HARQ entity, and each HARQ entity manages respective HARQ process. For the CA of downlink transmission, the network device may configure a corresponding HARQ entity for each carrier, and each HARQ entity manages a certain number of parallel HARQ processes (for example, 8 HARQ processes). For example, as shown in Fig. 2, carrier 1 corresponds to HARQ entity 1, carrier 2 corresponds to HARQ entity 2, the HARQ entity 1 can manage N HARQ processes, and the HARQ entity 2 can manage M HARQ processes, wherein N, M are integers greater than zero. For the network device side, the network device generates two TBs (namely TB1 and TB2) at the MAC layer. The TB1 and TB2 can be the same TB, or can be two parts divided by one certain TB. In general, TB1 and TB2 are related TBs. Then, the TB1 is placed in a HARQ process n (n is any one HARQ process in the N HARQ processes) of the HARQ entity 1 for transmission, and the TB2 is placed in a HARQ process m (m is any one HARQ process in the M HARQ processes) of the HARQ entity 2 for transmission, where process Identifiers (ID) of the HARQ process n and the HARQ process m may be the same or different. In other words, the network device may transmit related TBs through the same HARQ process managed by different HARQ entities, or may transmit related TBs through different HARQ processes managed by different HARQ entities.

For the terminal device side, the terminal device can receive Downlink Control Information (DCI) sent by the network device on different carriers, and demodulate the TBs transmitted through the carrier in the Physical layer (PHY) according to the DCI on each carrier. For example, for the TB1 transmitted through the carrier 1, the terminal device demodulates the TB1 through the DCI received on the carrier 1, and for the TB2 transmitted through the carrier 2, the terminal device demodulates the TB2 through the DCI received on the carrier 2. If the demodulation is correct, the terminal pushes the correctly demodulated TB to the corresponding HARQ entity of the MAC layer. If the demodulation is incorrect, the terminal stores an incorrectly received redundancy version in a corresponding HARQ process buffer, waiting for merging with retransmission data.

However, the terminal device does not learn that TB1 and TB2 are related TBs, and generates feedback information for each TB. Therefore, the feedback overhead is large. Specifically, if the demodulation is correct, Acknowledgement (ACK) is generated, and if the demodulation fails, Negative ACKnowledgement (NACK) is generated.

Moreover, the terminal device cannot obtain combined transmission gains of related TBs from the HARQ processes managed by different HARQ entities, and therefore, the transmission efficiency is low. For example, TB1 and TB2 are the same TB, and the transmission may be considered successful when any one of them is demodulated successfully, but since the terminal device does not learn that the TB 1 and TB2 are related, when demodulation of one of them fails (for example, demodulation of the TB1 succeeds, and demodulation of the TB2 fails), it is still necessary to retransmit the TB2, resulting in low transmission efficiency.

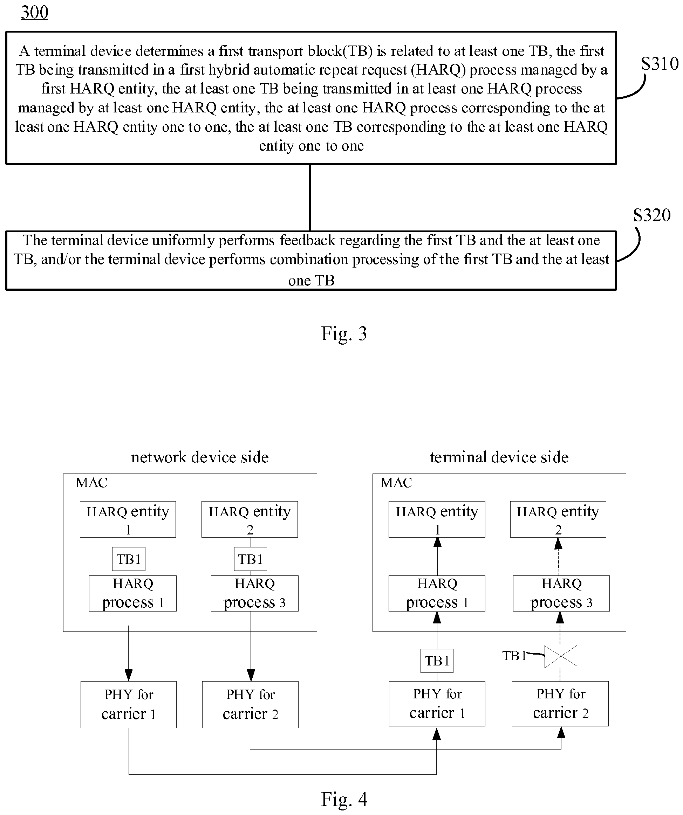

Based on the foregoing, the embodiment of the present application provides a communication method. Fig. 3 is a schematic flowchart of a communication method 300 according to an embodiment of the present application, which is described from the perspective of a terminal device. As shown in Fig. 3, the method 300 includes following steps.

S310, a terminal device determines that a first transport block TB is related to at least one TB. The first TB is transmitted in a first hybrid automatic repeat request HARQ process managed by a first HARQ entity, and the at least one TB is transmitted in at least one HARQ process managed by at least one HARQ entity. The at least one HARQ process corresponds to the at least one HARQ entity one to one, and the at least one TB corresponds to the at least one HARQ process one to one.

Specifically, the network device transmits the first TB by the first HARQ process managed by the first HARQ entity, or transmits TBs related to the first TB by one of the HARQ processes managed by one or more HARQ entities. The terminal device receives the first TB and the at least one TB. The terminal device determines that the first TB is related to the at least one TB. The terminal device determines that the first TB is related to the at least one TB according to at least one of transport blocks, medium access control MAC protocol data unit PDU structures, and data of the first TB and the at least one TB. The terminal device determines that TBs with the same MAC PDU structure and the same data are related TBs, or determines that TBs with the same transport block size and the same MAC PDU structure are related TBs, or determines that TBs with the same transport block size, the same MAC PDU structure and the same included data are related TBs. Alternatively, although not being a part of the present invention, the following alternative is provided for fully understanding the present invention, i.e., the terminal device may also receive indication information of the network device, and determine, according to the indication information, that the first TB is related to the at least one TB. For example, after transmitting the first TB and the at least one TB, the network device may send the indication information to the terminal device, indicating that the first TB and the at least one TB are related. Alternatively, the network device may also send the indication information to the terminal device before transmitting the first TB and the at least one TB to the terminal device or at the time of transmitting the first TB and the at least one TB to the terminal device. The embodiment of the present application does not limit the timing at which the network device sends the indication information to the terminal device.

According to an example not falling within the scope of the claims, the method 300 further includes:
the terminal device receiving first indication information sent by a network device, wherein the first indication information indicates that the first TB is related to the at least one TB.

In other words, the first indication information may indicate that the first TB transmitted by the first HARQ process managed by the first HARQ entity is related to the TB transmitted in one HARQ process managed by one or more HARQ entities.

According to this example not falling within the scope of the claims, the terminal device receiving first indication information sent by a network device includes:

the terminal device receiving downlink control information DCI sent by the network device through a first carrier, wherein the DCI includes the first indication information, and the first carrier corresponds to the first HARQ entity.

For example, the first indication information may be sent by Downlink Control Information (DCI) or other proprietary signaling.

Optionally, in some examples not falling within the scope of the claims, the first indication information further includes at least one of an identifier ID of the at least one HARQ entity, a HARQ process ID of the at least one HARQ process, and a carrier ID respectively corresponding to the at least one HARQ entity.

Specifically, if the network device transmits the first TB by the first carrier, the network device may transmit the first indication information by the first carrier, and indicate which TBs are related to the first TB by the first indication information. Specifically, the first indication information may indicate Identify (ID) of the carrier that transmits TBs related to the first TB, that is, a carrier ID used to transmit the at least one TB. Optionally, the first indication information may further indicate an ID of the at least one HARQ entity. Optionally, the first indication information may further indicate a process ID of a HARQ process managed by a HARQ entity for transmitting TBs related to the first TB. For example, the network device transmits TB1 through the HARQ process 1 managed by the HARQ entity 1, and transmits TBs related to the TB 1 through the HARQ process 3 managed by the HARQ entity 2. The HARQ entity 1 corresponds to the carrier 1, and the HARQ entity 2 corresponds to the carrier 2. Then, the first indication information sent by the network device through the carrier 1 may indicate at least one of an ID of the HARQ2 entity, a HARQ process ID of the HARQ process 3, and a carrier ID of the carrier 2.

The network device transmits the first TB by the first HARQ process managed by the first HARQ entity, and transmits TBs related to the first TB by one of the HARQ processes managed by one or more HARQ entities. For example, the network device may transmit the second TB through the second HARQ process managed by the second HARQ entity, or transmit the third TB through the third HARQ process managed by the third HARQ entity, or transmit the second TB through the second HARQ process managed by the second HARQ entity and transmit the third TB through the third HARQ process managed by the third HARQ entity, or transmit TBs related to the first TB through HARQ processes managed by other more HARQ entities. The second TB is related to the first TB, and the third TB is related to the first TB. Optionally, the HARQ process IDs of the first HARQ process and the second HARQ process may be the same or different, and the process IDs of the first HARQ process and the third HARQ process may be the same or different. That is, when the related TBs are transmitted by the HARQ processes managed by different HARQ entities, the process IDs of the HARQ processes corresponding to different HARQ entities may be the same or different.

It should be understood that the at least one HARQ entity may be a HARQ entity other than the first HARQ entity, or the at least one HARQ entity may also include the same HARQ entity as the first HARQ entity. In the embodiment of the present applicant, each HARQ entity may correspond to one carrier or a plurality of carriers, which is not limited in this embodiment of the present application.

The at least one TB comprises a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical may comprise: at least one of sizes of the transport blocks being identical, the MAC PDU structures being identical, and the data being identical.

That is, the terminal device determines that the first TB is related to the at least one TB according to at least one of transport blocks, medium access control MAC protocol data unit PDU structures, and data of the first TB and the at least one TB. The terminal device determines that TBs with the same MAC PDU structure and the same data are related TBs, or that TBs with the same transport block size and the same MAC PDU structure are related TBs, or that TBs with the same transport block size, the same MAC PDU structure and the same included data are related TBs.

Optionally, the first TB and each TB of the at least one TB may be the same TB, or the first TB and one certain TB of the at least one TB may be the same TB. That is, the network device can transmit the same TB through the HARQ processes managed by different HARQ entities, and the related TBs can be regarded as a duplicate version of one TB.

Optionally, the at least one TB includes a third TB, and a fourth TB includes at least two coding blocks CB. The first TB being related to the at least one TB may indicate that the first TB corresponds to at least one CB of the fourth TB, and the third TB corresponds to at least one CB of the fourth TB.

That is, the fourth TB may be divided into at least two code blocks (CBs) for transmission. The first TB and the third TB of the at least one TB may include at least one CB of the fourth TB. The at least one CB included in the first TB and the at least one CB included in the third TB may be partially the same or totally the same, or completely different. The network device adds a Cyclic Redundancy Check (CRC) when transmitting the first TB and the third TB respectively. That is to say, one TB can be divided into multiple CBs, and a part of CBs of the multiple CBs are transmitted through the HARQ processes managed by different HARQ entities, and this part of CBs transmitted by the HARQ processes managed by different HARQ entities may be the same or different.

It should be understood that the first TB being related to the at least one TB may mean that the first TB and each TB in the at least one TB are the same TB; or mean that the first TB and a part TB in the at least one TB are the same TB, and the first TB and other TBs in the at least one TB are parts of one certain TB; or mean that the first TB and each TB in the at least one TB are all parts of one certain TB.

For example, the first TB includes TB1, the at least one TB includes TB2 and TB3, and the the first TB being related to the at least one TB may mean that: TB1 and TB2 are the same TB, and TB1 and TB3 are the same TB; or may also mean that TB1 and TB2 are the same TB, TB1 and TB3 are two parts of TB4, for example, TB4 can be divided into two parts, including CB1 and CB2, the TB1 can include CB1, the TB3 can include CB2, alternatively, TB4 can be divided into four parts, including CB1∼CB4, the TB1 and TB3 include at least one CB of the CB1∼CB4, for example, the TB1 may include CB1, TB3 may include CB2, or the TB1 may include CB1 and CB2, and TB3 may include CB2 and CB3; or may also mean that TB1, TB2, and TB3 are all a part of TB5, for example, TB5 may be divided into a plurality of CBs, and TB1, TB2, and TB3 may include at least one CB of the plurality of CBs, and at least one CB included in TB1, TB2, and TB3 may be the same or different.

S320, the terminal device uniformly performs feedback regarding the first TB and the at least one TB, and/or the terminal device performs combination processing of the first TB and the at least one TB.

Therefore, in the embodiment of the present application, the terminal device determines that the first TB transmitted in the first HARQ process managed by the first HARQ entity is related to the TB transmitted in a certain HARQ process managed by at least one HARQ entity. Therefore, the terminal device uniformly feeds back the related TBs, thereby reducing the feedback overhead, or perform combination processing of the related TBs to obtain the combined transmission gain.

The terminal device uniformly performing feedback regarding the first TB and the at least one TB includes:
the terminal device generating identical feedback information for the first TB and the at least one TB; and
the terminal device sending the feedback information to the network device.

Specifically, since the first TB and the at least one TB are related TBs, the terminal device generates the same feedback information, for feeding back the first TB and the at least one TB. Therefore, in the communication method of the embodiment of the present application, the related TBs transmitted in the HARQ process managed by each HARQ entity are not fed back separately, but the related TBs are fed back through the same feedback information, thereby reducing the feedback overhead.

If the first TB and the at least one TB are the same TB, and as long as one TB is received correctly, it may be considered that the first TB is correctly received, and the ACK can be fed back to the network device, so that the network device may not retransmit other TBs that fail to receive, thereby improving utilization of transmission resource. That is, if the first TB and the at least one TB are the same TB, the terminal device feeds back the NACK to the network device only when reception of both the first TB and the at least one TB fails, and feeds back the ACK as long as reception of one of the first TB and the at least one TB succeeds, which can improve the utilization of transmission resource.

By way of example and not limitation, the terminal device may generate one piece of feedback information for the same part of the first TB and the at least one TB, and generate another piece of feedback information for different parts of the first TB and the at least one TB. The feedback information may be fed back in a form of bit mapping. For example, TB1, TB2, TB3, TB4 are related TBs. TB1 and TB2 are the same TB, TB3 and TB4 are the same TB, and TB1/TB2 and TB3/TB4 respectively correspond to two CBs (i.e. CB1 and CB2) of TB5, the feedback information may include feedback information for TB1 and TB2, and include feedback information for TB3 and TB4 at the same time. For example, if one of TB1 and TB2 is successfully received, it may be considered that CB1 of TB5 is successfully received. Similarly, if one of TB3 and TB4 is successfully received, it may be considered that CB2 of TB5 is successfully received. Then when one of TB1 and TB2 is successfully received, one bit of ACK for the TB1 and TB2 may be generated. When one of TB3 and TB4 is successfully received, one bit of ACK for the TB3 and the TB4 may be generated. Optionally, the feedback information may be fed back in a bit mapping manner, and the feedback information of a group of the same TB in the feedback information may be ACK or NACK of one bit. The embodiment of the present application does not limit the manner in which the feedback information is generated by the first TB and the at least one TB.

Optionally, in some embodiments, the terminal device sending the feedback information to the network device includes:

the terminal device transmitting the feedback information through a carrier corresponding to any one HARQ entity of the first HARQ entity or the at least one HARQ entity.

Specifically, the network device transmits related TBs by HARQ processes managed by the first HARQ entity and the at least one HARQ entity. The first HARQ entity corresponds to the first carrier, and each HARQ entity in the at least one HARQ entity corresponds to one carrier. The terminal device may feed back the first TB and the at least one TB by the same feedback information. Optionally, the terminal device may transmit the feedback information by the first carrier corresponding to the first HARQ entity or the carrier corresponding to any one HARQ entity in the at least one HARQ entity. For example, the network device transmits related TBs through the HARQ entity 1 and the HARQ entity 2. The HARQ entity 1 corresponds to the carrier 1, and the HARQ entity 2 corresponds to the carrier 2. The terminal device can generate the same feedback information for the related TBs. The feedback information may be transmitted through the carrier 1 corresponding to the HARQ entity 1, or may be transmitted through the carrier 2 corresponding to the HARQ entity 2.

Optionally, in some embodiments, the method further includes:
the terminal device receiving second indication information sent by a network device, wherein the second indication information indicates a carrier identifier ID for the terminal device to transmit the feedback information; and
the terminal device sending the feedback information to the network device including:
the terminal device transmitting the feedback information through a carrier corresponding to the carrier ID.

Specifically, the terminal device may receive the second indication information sent by the network device. The second indication information may be used to indicate the identifier ID of the carrier used by the terminal device to transmit the feedback information. That is, the carrier used by the terminal device to transmit the feedback information may be configured by the network device for the terminal device. Optionally, the terminal device may also decide which carrier to use to transmit feedback information on its own.

If demodulation of all the first TB and the at least one TB fails, that is, demodulation of all TBs fails, the terminal device generates one piece of NACK feedback information for the first TB and the at least one TB. The NACK is transmitted by a carrier corresponding to any one HARQ entity of the first HARQ entity or the at least one HARQ entity. Optionally, the network device may configure the carrier for transmission for the terminal device. In this case, the feedback information may correspond to an ID of a HARQ process managed by a HARQ entity corresponding to the carrier.

If demodulation of all the first TB and the at least one TB succeeds, that is, demodulation of all TBs succeeds, the terminal device generates one piece of ACK for the first TB and the at least one TB. The ACK is transmitted by a carrier corresponding to any one HARQ entity of the first HARQ entity or the at least one HARQ entity. Optionally, the network device may configure the carrier for transmission for the terminal device. The feedback information may be considered to correspond to an ID of a HARQ process managed by a HARQ entity that transmits the feedback information.

If demodulation of a part of the first TB and the at least one TB succeeds, the terminal device generates one piece of ACK for the first TB and the at least one TB. The ACK is transmitted by a carrier corresponding to any one HARQ entity of the first HARQ entity or the at least one HARQ entity. Optionally, the network device may configure the carrier for transmission for the terminal device. In this case, the feedback information may be considered to correspond to an ID of a HARQ process managed by a HARQ entity that transmits the feedback information.

The terminal device performing combination processing of the first TB and the at least one TB includes:
the terminal device decoding the first TB and the at least one TB at a physical layer; and
the terminal device performing combination processing regarding correctly decoded portions of the first TB and the at least one TB.

Specifically, since the first TB and the at least one TB are related TBs, the terminal device may perform combining processing of the first TB and the at least one TB. For example, the first TB and each TB in the at least one TB are the same TB, the terminal device may decode the first TB and the at least one TB, and may combine correctly decoded portions in the first TB and the at least one TB to obtain a correct TB. Specifically, the terminal device may decode the first TB and the at least one TB at a physical layer and perform combination processing regarding correctly decoded portions to obtain a correct TB. For example, TB1, TB2, TB3, TB4 are related TBs. TB1 and TB2 are the same TB, TB3 and TB4 are the same TB, TB1/TB2 and TB3/TB4 are a part of TB5. Then, if one of TB1 and TB2 is demodulated correctly and one of TB3 and TB4 is demodulated correctly, the correctly demodulated parts may be combined to obtain a correct TB.

Optionally, in some embodiments, the method further includes:
the terminal device transmitting related TBs through HARQ processes managed by different HARQ entities according to third indication information.

Optionally, in some embodiments, the method further includes:
the terminal device receiving DCI sent by the network device, wherein the DCI includes the third indication information.

Specifically, the terminal device may further determine, according to the third indication information, to use which HARQ processes managed by the HARQ entities to transmit the related TBs, in order to transmit the related TBs by the HARQ processes managed by different HARQ entities. Optionally, the terminal device may receive the DCI sent by the network device, wherein the DCI includes the third indication information. That is, corresponding to the uplink transmission, the terminal device may also transmit the related TBs through the HARQ processes managed by different HARQ entities.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

Hereinafter, the communication method of the embodiment of the present application is introduced in conjunction with specific examples. As shown in Fig. 4, it is assumed that there are two carriers, carrier 1 and carrier 2 respectively corresponding to HARQ entity 1 and HARQ entity 2. The network device generates TB1, which is placed in the HARQ process 1 managed by the HARQ entity 1 corresponding to the carrier 1 for transmission, and at the same time, the TB1 is placed in the HARQ process 3 managed by the HARQ entity 2 corresponding to the carrier 2 for transmission. That is, the related TBs are transmitted through the HARQ process 1 managed by the HARQ entity 1 and the process 3 managed by the HARQ entity 2, and the related TBs are the same TB. The network device may include indication information in the HARQ information (Information) in the DCI signaling, to indicate that the TBs transmitted in the HARQ process 1 in the HARQ entity 1 and the TBs transmitted in the HARQ process 3 managed by the HARQ entity 2 are the same TB. At the receiving side, the terminal device may perform possible combination of successfully received data on each carrier at the physical layer, and push a correct TB to the MAC layer. For example, the demodulation of TB1 on carrier 1 succeeds and the demodulation of TB1 on carrier 2 fails, then the TB1 successfully demodulated on the carrier 1 is pushed to the MAC layer. When the terminal device determines the feedback information, because one of the TBls is successfully transmitted, the terminal device may generate an ACK for all related TB1s, and transmit the feedback information through the carrier 1 or carrier 2, respectively corresponding to the HARQ process 1 managed by the HARQ entity 1 and the HARQ process 3 managed by the HARQ entity 2. The network device may configure the specific carrier for transmission for the terminal device.

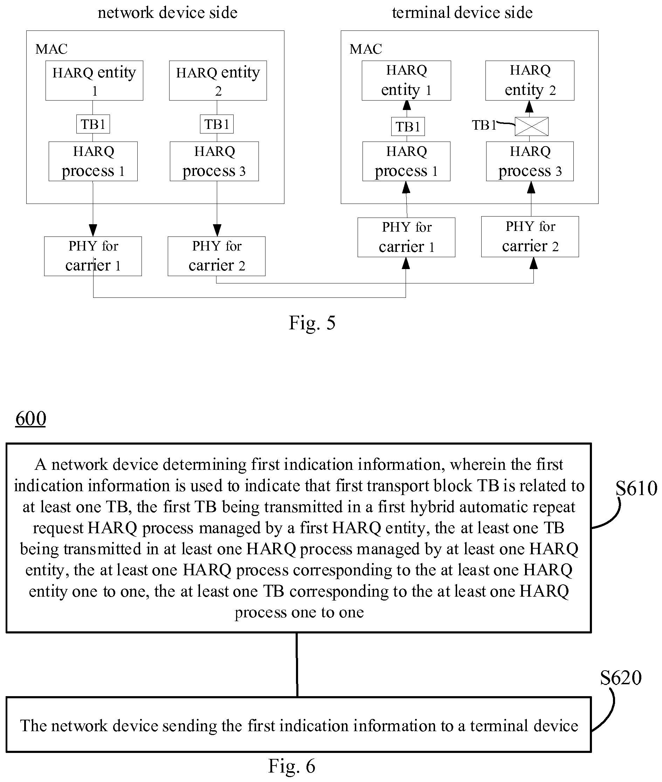

Optionally, the terminal device may push all the successfully demodulated data on each carrier to the MAC layer, or may discard partially successfully demodulated TBs and only push partially successfully demodulated TBs. For example, as shown in Fig. 5, if the data in carrier 1 and carrier 2 are successfully demodulated, optionally, the terminal device can discard the successfully demodulated TB1 in carrier 2, and only push the successfully demodulated TB 1 in carrier 1 to the MAC layer. When the feedback is performed, the device may only feed back one ACK, and the ACK corresponds to TB1 transmitted in the HARQ process 1 managed by the HARQ entity 1.

The communication method according to the embodiment of the present application is described in detail from the perspective of the terminal with reference to Fig. 3 to Fig. 5. Hereinafter, the communication method according to the embodiment of the present application will be described in detail from the perspective of the network device with reference to Fig. 6. It should be understood that the description on the network device side corresponds to the description on the terminal device side. Similar description may be referred to the above, and details are not described herein again to avoid repetition.

Fig. 6 is a schematic flowchart of a communication method according to an example not falling within the scope of the claims. As shown in Fig. 6, the method 600 includes:
S610, a network device generating first indication information, wherein the first indication information is used to indicate that first transport block TB is related to at least one TB, the first TB being transmitted in a first hybrid automatic repeat request HARQ process managed by a first HARQ entity, the at least one TB being transmitted in at least one HARQ process managed by at least one HARQ entity, the at least one HARQ process corresponding to the at least one HARQ entity one to one, the at least one TB corresponding to the at least one HARQ process one to one; and
S620, the network device sending the first indication information to a terminal device.

Optionally, in some embodiments, the network device sending the first indication information to a terminal device includes:
the network device sending downlink control information DCI to the terminal device through a first carrier, wherein the DCI includes the first indication information, and the first carrier corresponds to the first HARQ entity.

Optionally, in some embodiments, the method further includes:
the network device receiving feedback information sent by the terminal device, wherein the feedback information is feedback information for the first TB and the at least one TB.

Optionally, in some embodiments, the network device receiving feedback information sent by the terminal device includes:
the network device receiving the feedback information sent by the terminal device through a carrier corresponding to any one HARQ entity of the first HARQ entity or the at least one HARQ entity.

Optionally, in some embodiments, the method further includes:
the network device sending second indication information to the terminal device, wherein the second indication information indicates a carrier identifier ID for the terminal device to transmit the feedback information; and
the network device receiving feedback information sent by the terminal device including:
the network device receiving feedback information sent by the terminal device through a carrier corresponding to a carrier ID.

Optionally, in some embodiments, the first indication information further includes at least one of an identifier ID of the at least one HARQ entity, a HARQ process ID of the at least one HARQ process, and a carrier ID respectively corresponding to the at least one HARQ entity.

Optionally, in some embodiments, the at least one TB includes a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical includes: at least one of sizes of the transport blocks being identical, the MAC PDU structures being identical, and the data being identical.

Optionally, in some embodiments, the at least one TB includes a third TB, and a fourth TB includes at least two coding blocks CB, the first TB being related to the at least one TB indicates that the first TB corresponds to at least one CB of the fourth TB, and the third TB corresponds to at least one CB of the fourth TB.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

Optionally, in some embodiments, the method 300 further includes:
the terminal device receiving DCI sent by the network device, wherein the DCI includes the third indication information, and the third indication information indicates that the terminal device transmits related TBs by using HARQ processes managed by different HARQ entities.

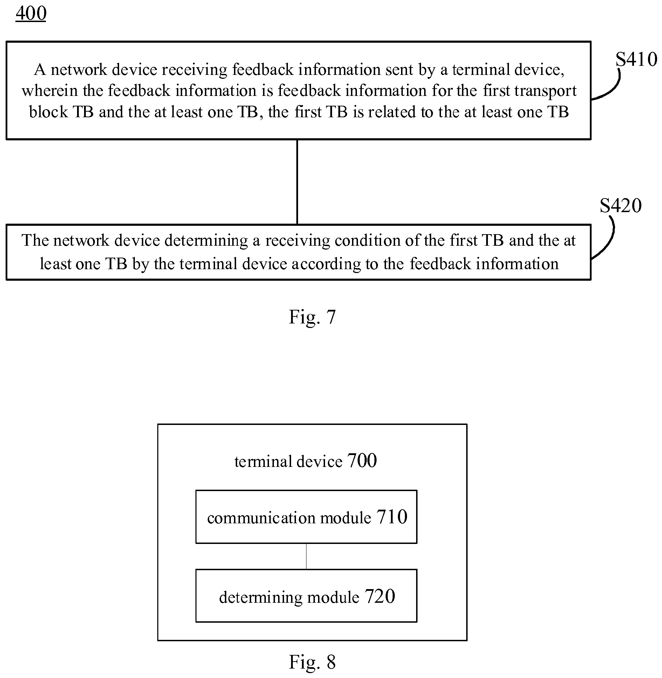

Fig. 7 is a schematic flowchart of a communication method according to an example not falling within the scope of the claims. As shown in Fig. 7, the method 400 includes:
S410, a network device receiving feedback information sent by a terminal device, wherein the feedback information is feedback information for the first transport block TB and the at least one TB, the first TB is related to the at least one TB; and
S420, the network device determining a receiving condition of the first TB and the at least one TB by the terminal device according to the feedback information.

That is, the terminal device may generate the same feedback information for the first TB and the at least one TB that is related to the first TB. The network device may receive the feedback information sent by the terminal device, to determine a receiving condition of the related TBs by the terminal device according to the feedback information. For example, the first TB and the at least one TB are the same TB, as long as one TB is received correctly, it may be considered that the first TB is correctly received, and the ACK can be fed back to the network device, so that the network device may not retransmit other TBs that fail to receive, thereby improving utilization of transmission resource. That is, if the first TB and the at least one TB are the same TB, the terminal device feeds back the NACK to the network device only when reception of both the first TB and the at least one TB fails, and feeds back the ACK as long as reception of one of the first TB and the at least one TB succeeds, which can improve the utilization of transmission resource.

Optionally, in some embodiments, the method further includes:
the network device transmitting the first TB through a first hybrid automatic repeat request HARQ process managed by a first HARQ entity, and transmitting the at least one TB through at least one HARQ process managed by at least one HARQ entity, the at least one HARQ process corresponding to the at least one HARQ entity one to one, the at least one TB corresponding to the at least one HARQ process one to one.

Optionally, in some embodiments, the method further includes:
the network device sending first indication information to the terminal device, wherein the first indication information indicates that the first TB is related to the at least one TB.

Optionally, in some embodiments, the first indication information further includes at least one of an identifier ID of the at least one HARQ entity, a HARQ process ID of the at least one HARQ process, and a carrier ID respectively corresponding to the at least one HARQ entity.

Optionally, in some embodiments, the network device receiving feedback information sent by a terminal device includes:
the network device receiving the feedback information sent by the terminal device through a carrier corresponding to any one HARQ entity of the first HARQ entity or the at least one HARQ entity.

Optionally, in some embodiments, the method further includes:
the network device sending second indication information to the terminal device, wherein the second indication information indicates a carrier identifier ID for the terminal device to transmit the feedback information; and
the network device receiving feedback information sent by a terminal device including:
the network device receiving feedback information sent by the terminal device through a carrier corresponding to the carrier ID.

Optionally, in some embodiments, the at least one TB includes a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical includes: at least one of sizes of the transport blocks being identical, the MAC PDU structures being identical, and the data being identical.

Optionally, in some embodiments, the at least one TB includes a third TB, and a fourth TB includes at least two coding blocks CB, the first TB being related to the at least one TB indicates that the first TB corresponds to at least one CB of the fourth TB, and the third TB corresponds to at least one CB of the fourth TB.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

The method embodiment of the present application is described in detail with reference to Fig. 3 to Fig. 7. The device embodiment of the present application is described in detail below with reference to Fig. 8 to Fig. 12. It should be understood that the device embodiment corresponds to the method embodiment, and similar description can be referred to the method embodiment.

Fig. 8 shows a schematic block diagram of a terminal device 700 in accordance with an embodiment of the present application. As shown in Fig. 8, the terminal device 700 includes:
a determining module 710, configured to determine that a first transport block TB is related to at least one TB, the first TB being transmitted in a first hybrid automatic repeat request HARQ process managed by a first HARQ entity, the at least one TB being transmitted in at least one HARQ process managed by at least one HARQ entity, the at least one HARQ process corresponding to the at least one HARQ entity one to one, the at least one TB corresponding to the at least one HARQ process one to one; and
a processing module 720, configured to uniformly perform feedback regarding the first TB and the at least one TB, and/or perform combination processing of the first TB and the at least one TB.

In some examples not falling within the scope of the claims, the terminal device 700 further includes:
a communication module, configured to receive first indication information sent by a network device, wherein the first indication information indicates that the first TB is related to the at least one TB.

Optionally, in some embodiments, the first indication information further includes at least one of an identifier ID of the at least one HARQ entity, a HARQ process ID of the at least one HARQ process, and a carrier ID respectively corresponding to the at least one HARQ entity.

Optionally, in some embodiments, the communication module is specifically configured to:
receive downlink control information DCI sent by the network device through a first carrier, wherein the DCI includes the first indication information, and the first carrier corresponds to the first HARQ entity.

According to the invention, the processing module 720 is specifically configured to:
generate identical feedback information for the first TB and the at least one TB; and
the communication module is further configured to:
send the feedback information to the network device.

Optionally, in some embodiments, the communication module is specifically configured to:
transmit the feedback information through a carrier corresponding to any one HARQ entity of the first HARQ entity or the at least one HARQ entity.

Optionally, in some embodiments, the communication module is further configured to:
receive second indication information sent by a network device, wherein the second indication information indicates a carrier identifier ID for the terminal device to transmit the feedback information; and
transmit the feedback information through a carrier corresponding to the carrier ID.

The processing module 720 is specifically configured to:
decode the first TB and the at least one TB at a physical layer; and
perform combination processing of correctly decoded portions regarding the first TB and the at least one TB.

Optionally, in some embodiments, the communication module is further configured to:
transmit related TBs through HARQ processes managed by different HARQ entities according to third indication information.

Optionally, in some embodiments, the communication module is further configured to:
receive DCI sent by the network device, wherein the DCI includes the third indication information.

Optionally, in some embodiments, the at least one TB includes a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical includes: at least one of sizes of the transport blocks being identical, the MAC PDU structures being identical, and the data being identical.

Optionally, in some embodiments, the at least one TB includes a third TB, and a fourth TB includes at least two coding blocks CB, the first TB being related to the at least one TB indicates that the first TB corresponds to at least one CB of the fourth TB, and the third TB corresponds to at least one CB of the fourth TB.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

It should be understood that the device 700 in the embodiment of the present application may correspond to the terminal device in the method embodiment of the present application, and the foregoing and other operations and/or functions of the respective units in the terminal device 700 are for respectively implementing the corresponding processes of the terminal device in the method 300 as shown in Fig. 3, which will not be described herein for brevity.

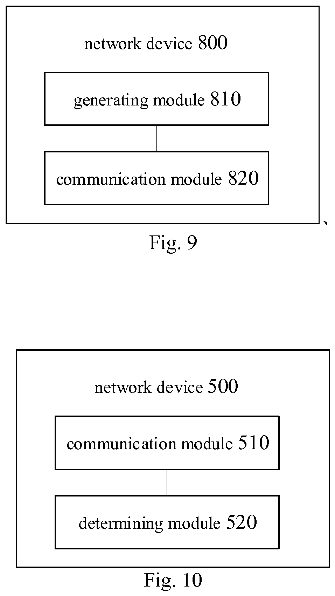

Fig. 9 shows a schematic block diagram of a network device 800 in accordance with an example not falling within the scope of the claims. As shown in Fig. 9, the network device 800 includes:
a generating module 810, configured to generate first indication information, wherein the first indication information is used to indicate that first transport block TB is related to at least one TB, the first TB being transmitted in a first hybrid automatic repeat request HARQ process managed by a first HARQ entity, the at least one TB being transmitted in at least one HARQ process managed by at least one HARQ entity, the at least one HARQ process corresponding to the at least one HARQ entity one to one, the at least one TB corresponding to the at least one HARQ process one to one; and
a communication module 820, configured to send the first indication information to a terminal device.

Optionally, in some embodiments, the communication module 820 is specifically configured to:
send downlink control information DCI to the terminal device through a first carrier, wherein the DCI includes the first indication information, and the first carrier corresponds to the first HARQ entity.

Optionally, in some embodiments, the communication module 820 is further configured to:
receive feedback information sent by the terminal device, wherein the feedback information is feedback information for the first TB and the at least one TB.

Optionally, in some embodiments, the communication module 820 is specifically configured to:
receive the feedback information sent by the terminal device through a carrier corresponding to any one HARQ entity of the first HARQ entity or the at least one HARQ entity.

Optionally, in some embodiments, the communication module 820 is further configured to:
send second indication information to the terminal device, wherein the second indication information indicates a carrier identifier ID for the terminal device to transmit the feedback information; and
receive feedback information sent by the terminal device through a carrier corresponding to a carrier ID.

Optionally, in some embodiments, the first indication information further includes at least one of an identifier ID of the at least one HARQ entity, a HARQ process ID of the at least one HARQ process, and a carrier ID respectively corresponding to the at least one HARQ entity.

Optionally, in some embodiments, the at least one TB includes a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical includes: at least one of sizes of the transport blocks being identical, the MAC PDU structures being identical, and the data being identical.

Optionally, in some embodiments, the at least one TB includes a third TB, and a fourth TB includes at least two coding blocks CB, the first TB being related to the at least one TB indicates that the first TB corresponds to at least one CB of the fourth TB, and the third TB corresponds to at least one CB of the fourth TB.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

Optionally, in some embodiments, the communication module 820 is further configured to:
send DCI to the terminal device, wherein the DCI includes the third indication information, and the third indication information indicates that the terminal device transmits related TBs by using HARQ processes managed by different HARQ entities.

It should be understood that the network device 800 in the embodiment of the present application may correspond to the network device in the method embodiment of the present application, and the foregoing and other operations and/or functions of the respective units in the network device 800 are for respectively implementing the corresponding processes of the network device in the method 600 as shown in Fig. 6, which will not be described herein for brevity.

Fig. 10 shows a schematic block diagram of a network device 500 in accordance with another example not falling within the scope of the claims. As shown in Fig. 10, the network device 500 includes:
a communication module 510, configured to receive feedback information sent by a terminal device, wherein the feedback information is feedback information for the first transport block TB and the at least one TB, the first TB is related to the at least one TB; and
a determining module 520, configured to determine a receiving condition of the first TB and the at least one TB by the terminal device according to the feedback information.

Optionally, in some embodiments, the communication module 510 is further configured to:
transmit the first TB through a first hybrid automatic repeat request HARQ process managed by a first HARQ entity, and transmit the at least one TB through at least one HARQ process managed by at least one HARQ entity, the at least one HARQ process corresponding to the at least one HARQ entity one to one, the at least one TB corresponding to the at least one HARQ process one to one.

Optionally, in some embodiments, the communication module 510 is further configured to:
send first indication information to the terminal device, wherein the first indication information indicates that the first TB is related to the at least one TB.

Optionally, in some embodiments, the first indication information further includes at least one of an identifier ID of the at least one HARQ entity, a HARQ process ID of the at least one HARQ process, and a carrier ID respectively corresponding to the at least one HARQ entity.

Optionally, in some embodiments, the communication module 510 is specifically configured that:
the network device receiving the feedback information sent by the terminal device through a carrier corresponding to any one HARQ entity of the first HARQ entity or the at least one HARQ entity.

Optionally, in some embodiments, the communication module 510 is further configured to:
send second indication information to the terminal device, wherein the second indication information indicates a carrier identifier ID for the terminal device to transmit the feedback information; and
receive feedback information sent by the terminal device through a carrier corresponding to the carrier ID.

Optionally, in some embodiments, the at least one TB includes a second TB, and the first TB being related to the at least one TB indicates that at least one of transport blocks, medium access control MAC protocol data unit PDU structures, and data of the first TB and the second TB is identical.

Optionally, in some embodiments, the at least one of the transport blocks, the MAC PDU structures, and the data being identical includes: at least one of sizes of the transport blocks being identical, the MAC PDU structures being identical, and the data being identical.

Optionally, in some embodiments, the at least one TB includes a third TB, and a fourth TB includes at least two coding blocks CB, the first TB being related to the at least one TB indicates that the first TB corresponds to at least one CB of the fourth TB, and the third TB corresponds to at least one CB of the fourth TB.

Optionally, in some embodiments, a process ID of each HARQ process in the first HARQ process and the at least one HARQ process is identical.

Optionally, in some embodiments, process IDs of a part of all HARQ processes in the first HARQ process and the at least one HARQ process are different.

It should be understood that the device 500 in the embodiment of the present application may correspond to the network device in the method embodiment of the present application, and the foregoing and other operations and/or functions of the respective units in the network device 500 are for respectively implementing the corresponding processes of the network device in the method 400 as shown in Fig. 7, which will not be described herein for brevity.

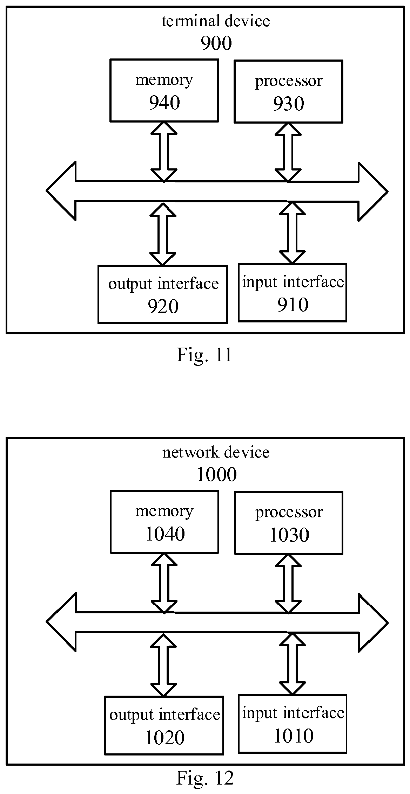

As shown in Fig. 11, the embodiment of the present application further provides a terminal device 900, which may be the terminal device 700 in Fig. 8, and can be used to execute contents of a terminal device corresponding to the method 300 in Fig. 3. The terminal device 900 includes: an input interface 910, an output interface 920, a processor 930, and a memory 940. The input interface 910, the output interface 920, the processor 930, and the memory 940 can be connected through a bus system. The memory 940 is for storing programs, instructions or codes. The processor 930 is configured to execute a program, an instruction, or a code in the memory 940, to control the input interface 910 to receive a signal, to control the output interface 920 to transmit a signal, and complete the operations in the foregoing method embodiments.

It should be understood that, in the embodiment of the present application, the processor 930 may be a central processing unit ("CPU"), and the processor 930 may also be other general-purpose processors, digital signal processors (DSP), application specific integrated circuits (ASICs), field programmable gata array (FPGA) or other programmable logic devices, discrete gates or transistor logic devices, discrete hardware components, and the like. The general purpose processor may be a microprocessor or the processor or any conventional processor or the like.

The memory 940 can include read only memory and random access memory and provides instructions and data to the processor 930. A portion of the memory 940 can also include a non-volatile random access memory. For example, the memory 940 can also store information of the device type.

In the implementation process, each content of the above method may be completed by an integrated logic circuit of hardware in the processor 930 or an instruction in a form of software. The content of the method disclosed in the embodiments of the present application may be directly implemented as performed by a hardware processor, or may be performed by a combination of hardware and software modules in the processor. The software module can be located in a conventional storage medium such as random access memory, flash memory, read only memory, programmable read only memory or electrically erasable programmable memory, register, and the likc. The storage medium is located in the memory 940, and the processor 930 reads the information in the memory 940 and completes the contents of the above method in combination with its hardware. To avoid repetition, it will not be described in detail here.

In a specific implementation, the determining module 710 and the processing module 720 in Fig. 8 can be implemented by the processor 930 of Fig. 11, and the communication module included in the device 700 can be implemented by using the input interface 910 and the output interface 920 of Fig. 11.

As shown in Fig. 12, according to an example not falling within the scope of the claims, the embodiment of the present application further provides a network device 1000, which may be the network device 800 in Fig. 9 or the network device 500 in Fig. 10, and can be used to perform the content of the network device corresponding to method 600 in Fig. 6 or the method 400 in Fig. 7. The network device 1000 includes: an input interface 1010, an output interface 1020, a processor 1030, and a memory 1040. The input interface 1010, the output interface 1020, the processor 1030, and the memory 1040 may be connected by a bus system. The memory 1040 is configured to store a program, an instruction, or a code. The processor 1030 is configured to execute a program, an instruction or a code in the memory 1040, to control the input interface 1010 to receive a signal, to control the output interface 1020 to send a signal, and complete the operations in the foregoing method embodiments.

It should be understood that, in the embodiment of the present application, the processor 1030 may be a central processing unit ("CPU"), and the processor 1030 may also be other general-purpose processors, digital signal processors (DSP), application specific integrated circuits (ASICs), Field Programmable Gata Array (FPGA) or other programmable logic devices, discrete gates or transistor logic devices, discrete hardware components, and the like. The general purpose processor may be a microprocessor or the processor or any conventional processor or the like.

The memory 1040 can include read only memory and random access memory and provides instructions and data to the processor 1030. A portion of the memory 1040 can also include a non-volatile random access memory. For example, the memory 1040 can also store information of the device type.

In the implementation process, each content of the above method may be completed by an integrated logic circuit of hardware in the processor 1030 or an instruction in a form of software. The content of the method disclosed in the embodiments of the present application may be directly implemented as performed by a hardware processor, or may be performed by a combination of hardware and software modules in the processor. The software module can be located in a conventional storage medium such as random access memory, flash memory, read only memory, programmable read only memory or electrically erasable programmable memory, register, and the like. The storage medium is located in the memory 1040, and the processor 1030 reads the information in the memory 1040 and completes the contents of the above method in combination with its hardware. To avoid repetition, it will not be described in detail here.

In a specific implementation manner, the generating module 810 included in the network device 800 in Fig. 9 can be implemented by the processor 1030 of Fig. 12, and the communication module 820 in Fig. 9 can be implemented by using the input interface 1010 and the output interface 1020 of Fig. 12.

In a specific implementation, the determining module 520 included in the network device 500 in Fig. 10 can be implemented by the processor 1030 of Fig. 12, and the communication module 510 in Fig. 10 can be implemented by using the input interface 1010 and the output interface 1020 of Fig. 12.

Those of ordinary skill in the art will appreciate that the units and algorithm steps of the various examples described in connection with the embodiments disclosed herein can be implemented in electronic hardware or a combination of computer software and electronic hardware. Whether these functions are performed in hardware or software depends on the specific application and design constraints of the technical solution. A person skilled in the art can use different methods for implementing the described functions for each particular application, but such implementation should not be considered to go beyond the scope of the present application.

A person skilled in the art can clearly understand that for the convenience and brevity of the description, the specific working process of the system, the device and the unit described above can refer to the corresponding process in the foregoing method embodiment, and details are not described herein again.

In the several embodiments provided by the present application, it should be understood that the disclosed systems, devices, and methods may be implemented in other manners. For example, the device embodiments described above are merely illustrative. For example, the division of the unit is only a logical function division. In actual implementation, there may be another division manner. For example, a plurality of units or components may be combined or integrated into another system, or some features can be ignored or not executed. In addition, the coupling or direct coupling or communication connection shown or discussed may be an indirect coupling or communication connection through some interfaces, devices or units, which may be electrical, mechanical or otherwise.

The units described as separate components may or may not be physically separated, and the components displayed as units may or may not be physical units. That is, they may be located in one place, or may be distributed to multiple network units. Some or all of the units may be selected according to actual needs to achieve the purpose of the technical solution of the embodiment.

In addition, each functional unit in each embodiment of the present application may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, the technical solution of the present application which is essential or a part contributes to the prior art, or a part of the technical solution, may be embodied in the form of a software product, which is stored in a storage medium, including instructions to cause a computer device (which may be a personal computer, server, or network device, etc.) to perform all or part of the steps of the methods described in various embodiments of the present application. The foregoing storage medium includes: a U disk, a mobile hard disk, a Read-Only Memory (ROM), a Random Access Memory (RAM), a disk, or an optical disk or other media that can store program codes.

The above is only the specific embodiment of the present application, but the scope of the present application is not limited thereto, and any person skilled in the art can easily think of changes or substitutions within the technical scope of the present application and they should be covered by the scope of the present application. Therefore, the scope of the application should be determined by the scope of the claims.

## Claims

1. A communication method supporting carrier aggregation, wherein each carrier corresponds to a corresponding hybrid automatic repeat request HARQ entity, and each HARQ entity manages a respective HARQ process, the method comprising:
determining (S310), by a terminal device, that a first transport block TB is related to at least one TB, the first TB being transmitted in a first hybrid automatic repeat request HARQ process managed by a first HARQ entity, the at least one TB being transmitted in at least one HARQ process managed by at least one HARQ entity, the at least one HARQ process corresponding to the at least one HARQ entity one to one, the at least one TB corresponding to the at least one HARQ process one to one; and
performing (S320), by the terminal device, at least one of:
feeding back negative acknowledgement, NACK, to the network device only when reception of both the first TB and the at least one TB fails and feeding back acknowledgement, ACK, as long as reception of one or at least a part of the first TB and the at least one TB succeeds; and
combination processing of the first TB and the at least one TB,
wherein determining by the terminal device that a first transport block is related to the at least one TB comprises:
determining that TBs with the same medium access control, MAC, protocol data unit, PDU, structure and the same data are related TBs; or
determining that TBs with the same transport block size and the same MAC PDU structure are related TBs; or
determining that TBs with the same transport block size, the same MAC PDU structure and the same included data are related TBs,
wherein the combination processing of the first TB and the at least one TB comprises:
decoding, by the terminal device, the first TB and the at least one TB at a physical layer; and
performing, by the terminal device, combination processing regarding correctly decoded portions of the first TB and the at least one TB.

2. The communication method according to claim 1, further comprising:
generating, by the terminal device, identical feedback information for the first TB and the at least one TB; and
sending, by the terminal device, the feedback information to the network device,
preferably, the sending, by the terminal device, the feedback information to the network device comprises:
transmitting, by the terminal device, the feedback information through a carrier corresponding to any one HARQ entity of the first HARQ entity or the at least one HARQ entity.

3. The communication method according to claim 2, wherein the method further comprises:
receiving, by the terminal device, indication information sent by the network device, wherein the indication information indicates a carrier identifier ID for the terminal device to transmit the feedback information; and
sending, by the terminal device, the feedback information to the network device comprising:
transmitting, by the terminal device, the feedback information through a carrier corresponding to the carrier ID.

4. The communication method according to any one of claims 1 to 3, wherein the method further comprises:
transmitting, by the terminal device, related TBs through HARQ processes managed by different HARQ entities according to second indication information.

5. The communication method according to any one of claims 1 to 4, wherein the method further comprises:
receiving, by the terminal device, downlink control information, DCI, sent by the network device, wherein the DCI comprises the second indication information.

6. The communication method according to claim 1 wherein the at least one of the transport blocks, the MAC PDU structures, and the data being identical comprises: at least one of sizes of the transport blocks being identical, the MAC PDU structures being identical, and the data being identical.

7. The communication method according to any one of claims 1 to 6, wherein a process ID of each HARQ process in the first HARQ process and the at least one HARQ process is identical, or
process IDs of a part of all HARQ processes in the first HARQ process and the at least one HARQ process are different.

8. A terminal device supporting carrier aggregation, wherein each carrier corresponds to a corresponding hybrid automatic repeat request HARQ entity, and each HARQ entity manages a respective HARQ process, the terminal device comprising:
a determining module (710), configured to determine that a first transport block TB is related to at least one TB, the first TB being transmitted in a first hybrid automatic repeat request HARQ process managed by a first HARQ entity, the at least one TB being transmitted in at least one HARQ process managed by at least one HARQ entity, the at least one HARQ process corresponding to the at least one HARQ entity one to one, the at least one TB corresponding to the at least one HARQ process one to one; and
a processing module (720), configured to perform, at least one of:
feeding back negative acknowledgement, NACK, to the network device only when reception of both the first TB and the at least one TB fails and feeding back acknowledgement, ACK, as long as reception of one or at least a part of the first TB and the at least one TB succeeds; and
combination processing of the first TB and the at least one TB,
wherein determining module (710) is further configured to:
determine that TBs with the same medium access control, MAC, protocol data unit, PDU, structure and the same data are related TBs; or
determine that TBs with the same transport block size and the same MAC PDU structure are related TBs; or
determine that TBs with the same transport block size, the same MAC PDU structure and the same included data are related TBs,
wherein the processing module (720) is configured to:
decode the first TB and the at least one TB at a physical layer; and
perform combination processing of correctly decoded portions regarding the first TB and the at least one TB.

9. The terminal device according to claim 8, wherein the processing module (720) is configured to:
generate identical feedback information for the first TB and the at least one TB; and
the communication module is further configured to:
send the feedback information to the network device,
preferably, the communication module is configured to:
transmit the feedback information through a carrier corresponding to any one HARQ entity of the first HARQ entity or the at least one HARQ entity.

10. The terminal device according to claim 9, wherein the communication module is further configured to:
receive indication information sent by a network device, wherein the indication information indicates a carrier identifier ID for the terminal device to transmit the feedback information; and
transmit the feedback information through a carrier corresponding to the carrier ID.

## Patentansprüche

1. Kommunikationsverfahren, das eine Trägeraggregation unterstützt, wobei jeder Träger einer hybriden automatischen Wiederholungsanforderungseinheit, HARQ-Einheit, entspricht und wobei jede HARQ-Einheit einen jeweiligen HARQ-Prozess verwaltet, wobei das Verfahren umfasst:
Ermitteln (S310), durch eine Endgerätevorrichtung, dass ein erster Transportblock TB mit mindestens einem TB zusammengehört, wobei der erste TB in einem ersten hybriden automatischen Wiederholungsanforderungsprozess, HARQ-Prozess, übertragen wird, der von einer ersten HARQ-Einheit verwaltet wird, wobei der mindestens eine TB in mindestens einem HARQ-Prozess übertragen wird, der von mindestens einer HARQ-Einheit verwaltet wird, wobei der mindestens eine HARQ-Prozess der mindestens einen HARQ-Einheit Eins-zu-Eins entspricht, wobei der mindestens eine TB dem mindestens einen HARQ-Prozess Eins-zu-Eins entspricht; und
Ausführen (S320), durch die Endgerätevorrichtung, mindestens eines von:
Rückmelden einer negativen Bestätigung, NACK, an die Netzwerkvorrichtung, nur wenn ein Empfang sowohl des ersten TB als auch des mindestens einen TB scheitert, und Rückmelden einer Bestätigung, ACK, an die Netzwerkvorrichtung, sofern ein Empfang von einem oder mindestens einem Teil des ersten TB und des mindestens einen TB erfolgreich ist; und
Kombinationsverarbeiten des ersten TB und des mindestens einen TB,
wobei das Ermitteln, durch die Endgerätevorrichtung, dass ein erster Transportblock mit mindestens einem TB zusammengehört, umfasst:
Ermitteln, dass TBs mit der gleichen Protokolldateneinheitsstruktur für eine Medienzugriffssteuerung (Medium Access Control Protocol Data Unit structure, MAC-PDU-Struktur) und den gleichen Daten zusammengehörige TBs sind; oder
Ermitteln, dass TBs mit der gleichen Transportblockgröße und der gleichen MAC-PDU-Struktur zusammengehörige TBs sind; oder
Ermitteln, dass TBs mit der gleichen Transportblockgröße, der gleichen MAC-PDU-Struktur und den gleichen enthaltenen Daten zusammengehörige TBs sind,
wobei das Kombinationsverarbeiten des ersten TB und des mindestens einen TB umfasst:
Decodieren, durch die Endgerätevorrichtung, des ersten TB und des mindestens einen TB in einer Datenübertragungsschicht; und
Ausführen, durch die Endgerätevorrichtung, eines Kombinationsverarbeitens hinsichtlich richtig decodierter Anteile des ersten TB und des mindestens einen TB.

2. Kommunikationsverfahren nach Anspruch 1, das außerdem umfasst:
Erzeugen, durch die Endgerätevorrichtung, identischer Rückmeldeinformationen für den ersten TB und den mindestens einen TB; und
Senden der Rückmeldeinformationen von der Endgerätevorrichtung an die Netzwerkvorrichtung,
wobei das Senden der Rückmeldeinformationen von der Endgerätevorrichtung an die Netzwerkvorrichtung vorzugsweise umfasst:
Übertragen, durch die Endgerätevorrichtung, der Rückmeldeinformationen durch einen Träger, der einer beliebigen HARQ-Einheit der ersten HARQ-Einheit oder der mindestens einen HARQ-Einheit entspricht.

3. Kommunikationsverfahren nach Anspruch 2, wobei das Verfahren außerdem umfasst:
Empfangen, in der Endgerätevorrichtung, von Anzeigeinformationen, die von der Netzwerkvorrichtung gesendet werden, wobei die Anzeigeinformationen eine Trägerkennung, Träger-ID, für die Endgerätevorrichtung zum Übertragen der Rückmeldeinformationen anzeigen; und
wobei das Senden der Rückmeldeinformationen von der Endgerätevorrichtung an die Netzwerkvorrichtung umfasst:
Übertragen, durch die Endgerätevorrichtung, der Rückmeldeinformationen durch einen Träger, welcher der Träger-ID entspricht.

4. Kommunikationsverfahren nach einem der Ansprüche 1 bis 3, wobei das Verfahren außerdem umfasst:
Übertragen, durch die Endgerätevorrichtung, von zusammengehörigen TBs durch HARQ-Prozesse, die gemäß zweiten Anzeigeinformationen von unterschiedlichen HARQ-Einheiten verwaltet werden.

5. Kommunikationsverfahren nach einem der Ansprüche 1 bis 4, wobei das Verfahren außerdem umfasst:
Empfangen, in der Endgerätevorrichtung, von Downlink-Steuerinformationen, DCI, die von der Netzwerkvorrichtung gesendet werden, wobei die DCI die zweiten Anzeigeinformationen umfassen.

6. Kommunikationsverfahren nach Anspruch 1, wobei das Identischsein des mindestens einen der Transportblöcke, der MAC-PDU-Strukturen und der Daten umfasst, dass mindestens eine der Größen der Transportblöcke identisch ist, die MAC-PDU-Strukturen identisch sind und die Daten identisch sind.

7. Kommunikationsverfahren nach einem der Ansprüche 1 bis 6, wobei eine Prozess-ID von jedem HARQ-Prozess in dem ersten HARQ-Prozess und dem mindestens einen HARQ-Prozess identisch ist, oder
wobei Prozess-IDs von einem Teil der, oder von allen HARQ-Prozessen in dem ersten HARQ-Prozess und dem mindestens einen HARQ-Prozess verschieden sind.

8. Endgerätevorrichtung, die eine Trägeraggregation unterstützt, wobei jeder Träger einer hybriden automatischen Wiederholungsanforderungseinheit, HARQ-Einheit, entspricht und wobei jede HARQ-Einheit einen jeweiligen HARQ-Prozess verwaltet, wobei die Endgerätevorrichtung umfasst:
ein Ermittlungsmodul (710), das konfiguriert ist zum Ermitteln, dass ein erster Transportblock TB mit mindestens einem TB zusammengehört, wobei der erste TB in einem ersten hybriden automatischen Wiederholungsanforderungsprozess, HARQ-Prozess, übertragen wird, der von einer ersten HARQ-Einheit verwaltet wird, wobei der mindestens eine TB in mindestens einem HARQ-Prozess übertragen wird, der von mindestens einer HARQ-Einheit verwaltet wird, wobei der mindestens eine HARQ-Prozess der mindestens einen HARQ-Einheit Eins-zu-Eins entspricht, wobei der mindestens eine TB dem mindestens einen HARQ-Prozess Eins-zu-Eins entspricht; und
ein Verarbeitungsmodul (720), das konfiguriert ist zum Ausführen mindestens eines von:
Rückmelden einer negativen Bestätigung, NACK, an die Netzwerkvorrichtung, nur wenn ein Empfang sowohl des ersten TB als auch des mindestens einen TB scheitert, und Rückmelden einer Bestätigung, ACK, an die Netzwerkvorrichtung, sofern ein Empfang von einem oder mindestens einem Teil des ersten TB und des mindestens einen TB erfolgreich ist; und
Kombinationsverarbeiten des ersten TB und des mindestens einen TB,
wobei das Ermittlungsmodul (710) außerdem konfiguriert ist zum:
Ermitteln, dass TBs mit der gleichen Protokolldateneinheitsstruktur für eine Medienzugriffssteuerung (Medium Access Control Protocol Data Unit structure, MAC-PDU-Struktur) und den gleichen Daten zusammengehörige TBs sind; oder
Ermitteln, dass TBs mit der gleichen Transportblockgröße und der gleichen MAC-PDU-Struktur zusammengehörige TBs sind; oder
Ermitteln, dass TBs mit der gleichen Transportblockgröße, der gleichen MAC-PDU-Struktur und den gleichen enthaltenen Daten zusammengehörige TBs sind,
wobei das Verarbeitungsmodul (720) konfiguriert ist zum:
Decodieren des ersten TB und des mindestens einen TB in einer Datenübertragungsschicht; und
Ausführen eines Kombinationsverarbeitens von richtig decodierten Anteilen des ersten TB und des mindestens einen TB.

9. Endgerätevorrichtung nach Anspruch 8, wobei das Verarbeitungsmodul (720) konfiguriert ist zum:
Erzeugen identischer Rückmeldeinformationen für den ersten TB und den mindestens einen TB; und
wobei das Kommunikationsmodul außerdem konfiguriert ist zum:
Senden der Rückmeldeinformationen an die Netzwerkvorrichtung,
wobei das Kommunikationsmodul vorzugsweise konfiguriert ist zum:
Übertragen der Rückmeldeinformationen durch einen Träger, der einer beliebigen HARQ-Einheit der ersten HARQ-Einheit oder der mindestens einen HARQ-Einheit entspricht.

10. Endgerätevorrichtung nach Anspruch 9, wobei das Kommunikationsmodul außerdem konfiguriert ist zum:
Empfangen von Anzeigeinformationen, die von einer Netzwerkvorrichtung gesendet werden, wobei die Anzeigeinformationen eine Trägerkennung, Träger-ID, für die Endgerätevorrichtung zum Übertragen der Rückmeldeinformationen anzeigt; und
Übertragen der Rückmeldeinformationen durch einen Träger, welcher der Träger-ID entspricht.

## Revendications

1. Procédé de communication prenant en charge une agrégation de porteuses, chaque porteuse correspondant à une entité de demande de répétition automatique hybride (HARQ) correspondante et chaque entité HARQ gérant un processus HARQ respectif, le procédé comprenant les étapes consistant à :
déterminer (S310), par un dispositif terminal, qu'un premier bloc de transport (TB) est associé à au moins un TB, le premier TB étant transmis dans un premier processus de demande de répétition automatique hybride (HARQ) géré par une première entité HARQ, l'au moins un TB étant transmis dans au moins un processus HARQ géré par au moins une entité HARQ, l'au moins un processus HARQ correspondant de façon biunivoque à l'au moins une entité HARQ, l'au moins un TB correspondant de façon biunivoque à l'au moins un processus HARQ ; et
réaliser (S320), par le dispositif terminal, au moins une des étapes suivantes :
retourner un acquittement négatif (NACK) au dispositif de réseau uniquement quand la réception du premier TB et de l'au moins un TB échoue et retourner un acquittement (ACK) tant que la réception du premier TB ou de l'au moins un TB ou bien d'au moins une partie du premier TB et de l'au moins un TB réussit ; et
traiter de façon combinée le premier TB et l'au moins un TB,
la détermination, par le dispositif terminal, qu'un premier bloc de transport est associé à l'au moins un TB comprenant l'étape consistant à :
déterminer que des TB avec la même structure d'unité de données de protocole (PDU) de contrôle d'accès au support (MAC) et les mêmes données sont des TB associés ; ou
déterminer que des TB avec la même taille de bloc de transport et la même structure PDU MAC sont des TB associés ; ou
déterminer que des TB avec la même taille de bloc de transport, la même structure PDU MAC et les mêmes données incluses sont des TB associés,
le traitement combiné du premier TB et de l'au moins un TB comprenant les étapes consistant à :
décoder, par le dispositif terminal, le premier TB et l'au moins un TB au niveau d'une couche physique ; et
réaliser, par le dispositif terminal, un traitement combiné concernant des parties correctement décodées du premier TB et de l'au moins un TB.

2. Procédé de communication selon la revendication 1, comprenant en outre les étapes consistant à :
générer, par le dispositif terminal, une information de retour identique pour le premier TB et l'au moins un TB ; et
envoyer, par le dispositif terminal, l'information de retour au dispositif de réseau,
de préférence, l'envoi, par le dispositif de terminal, de l'information de retour au dispositif de réseau comprenant l'étape consistant à :
transmettre, par le dispositif terminal, l'information de retour par l'intermédiaire d'une porteuse qui correspond à une entité HARQ quelconque parmi la première entité HARQ et l'au moins une entité HARQ.

3. Procédé de communication selon la revendication 2, le procédé comprenant en outre l'étape consistant à :
recevoir, par le dispositif terminal, une information d'indication envoyée par le dispositif de réseau, l'information d'indication indiquant un identifiant (ID) de porteuse pour le dispositif terminal pour transmettre l'information de retour ; et
l'envoi, par le dispositif terminal, de l'information de retour au dispositif de réseau comprenant l'étape consistant à :
transmettre, par le dispositif terminal, l'information de retour par l'intermédiaire d'une porteuse qui correspond à l'ID de porteuse.

4. Procédé de communication selon l'une quelconque des revendications 1 à 3, le procédé comprenant en outre l'étape consistant à :
transmettre, par le dispositif terminal, des TB associés par l'intermédiaire de processus HARQ gérés par différentes entités HARQ selon une seconde information d'identification.

5. Procédé de communication selon l'une quelconque des revendications 1 à 4, le procédé comprenant en outre l'étape consistant à :
recevoir, par le dispositif terminal, une information de commande en liaison descendante (DCI) envoyée par le dispositif de réseau, la DCI comprenant la seconde information d'indication.

6. Procédé de communication selon la revendication 1, dans lequel le fait que les blocs de transport et/ou les structures PDU MAC et/ou les données soient identiques comprend le fait que : des tailles des blocs de transport sont identiques et/ou les structures PDU MAC sont identiques et/ou les données sont identiques.

7. Procédé de communication selon l'une quelconque des revendications 1 à 6, dans lequel un ID de processus de chaque processus HARQ parmi le premier processus HARQ et l'au moins un processus HARQ est identique, ou
des ID de processus d'une partie de tous les processus HARQ parmi le premier processus HARQ et l'au moins un processus HARQ sont différents.

8. Dispositif terminal prenant en charge une agrégation de porteuses, chaque porteuse correspondant à une entité de demande de répétition automatique hybride (HARQ) correspondante et chaque entité HARQ gérant un processus HARQ respectif, le dispositif terminal comprenant :
un module de détermination (710), configuré pour déterminer qu'un premier bloc de transport (TB) est associé à au moins un TB, le premier TB étant transmis dans un premier processus de demande de répétition automatique hybride (HARQ) géré par une première entité HARQ, l'au moins un TB étant transmis dans au moins un processus HARQ géré par au moins une entité HARQ, l'au moins un processus HARQ correspondant de façon biunivoque à l'au moins une entité HARQ, l'au moins un TB correspondant de façon biunivoque à l'au moins un processus HARQ ; et
un module de traitement (720), configuré pour réaliser au moins une des opérations suivantes :
retourner un acquittement négatif (NACK) au dispositif de réseau uniquement quand la réception du premier TB et de l'au moins un TB échoue et retourner un acquittement (ACK) tant que la réception du premier TB ou de l'au moins un TB ou bien d'au moins une partie du premier TB et de l'au moins un TB réussit ; et
traiter de façon combinée le premier TB et l'au moins un TB,
le module de détermination (710) étant en outre configuré pour :
déterminer que des TB avec la même structure d'unité de données de protocole (PDU) de contrôle d'accès au support (MAC) et les mêmes données sont des TB associés ; ou
déterminer que des TB avec la même taille de bloc de transport et la même structure PDU MAC sont des TB associés ; ou
déterminer que des TB avec la même taille de bloc de transport, la même structure PDU MAC et les mêmes données incluses sont des TB associés,
le module de traitement (720) étant configuré pour :
décoder le premier TB et l'au moins un TB au niveau d'une couche physique ; et
réaliser un traitement combiné de parties correctement décodées concernant le premier TB et l'au moins un TB.

9. Dispositif terminal selon la revendication 8, dans lequel le module de traitement (720) est configuré pour :
générer une information de retour identique pour le premier TB et l'au moins un TB ; et
le module de communication est en outre configuré pour :
envoyer l'information de retour au dispositif terminal,
de préférence le module de communication étant configuré pour :
transmettre l'information de retour par l'intermédiaire d'une porteuse qui correspond à une entité HARQ quelconque parmi la première entité HARQ et l'au moins une entité HARQ.

10. Dispositif terminal selon la revendication 9, dans lequel le module de communication est en outre configuré pour :
recevoir une information d'indication envoyée par un dispositif de réseau, l'information d'indication indiquant un identifiant (ID) de porteuse pour le dispositif terminal pour transmettre l'information de retour ; et
transmettre l'information de retour par l'intermédiaire d'une porteuse qui correspond à l'ID de porteuse.
